# EUROPEAN PATENT SPECIFICATION

(11) **EP 2 604 445 B1**
(45) Date of publication and mention of the grant of the patent: **20.05.2015**
(21) Application number: 12194072.0
(22) Date of filing: 23.11.2012
(51) Int. Cl.: B60B 27/02, B60B 27/00, F16C 35/077, F16C 19/38

(54) **A hub-bearing assembly for the wheel of a mothor vehicle**
Nabenlageranordnung für das Rad eines Kraftfahrzeugs
Assemblage de palier de moyeu de roue de véhicule à moteur

(30) Priority: 12.12.2011 IT TO20111131
(43) Date of publication of application: 19.06.2013
(73) Proprietor: Aktiebolaget SKF, 415 50 Göteborg (SE)
(72) Inventor: Re, Paolo, 10042 Nichelino (TO) (IT); Gemello, Marco, 10042 Nichelino (TO) (IT); Gulli', Carmelo, 10129 Torino (TO) (IT)
(74) Representative: Tedeschini, Luca

(56) References cited:
- EP-A1- 2 378 143
- WO-A1-01/54925
- WO-A1-03/070490
- DE-A1- 10 061 663
- US-A1- 2002 015 545
- US-A1- 2003 012 475

## Description

### BACKGROUND OF THE INVENTION

The present invention relates to a hub-bearing assembly for the wheel of a motor vehicle.

The automobile industry is required to meet an increasingly growing demand for a reduction in weight of the components of motor vehicles in order to reduce fuel consumption levels and CO2 exhaust emissions.

Hub-bearing assemblies have been designed where one or more rolling bearings are mounted inside an annular hub made of a lightweight material, such as an aluminium alloy, which forms a flange which extends radially outwards for mounting the wheel, and an inner cylindrical cavity, inside which the outer bearing ring is directly mounted (if of the type with a double row of bearings) or the outer rings of two bearing units are mounted in axially spaced positions.

The closest prior art document US 2002/0015545 A1 discloses a hub-bearing unit for a motor vehicle wheel comprises a bearing housed in a central axial cylindrical seat of a radially outer annular hub adapted for connection to the wheel of a vehicle. The bearing has an rotating ring the axial width of which is greater than that of the cylindrical seat. The outer ring comprises at least one tubular projection extending axially from one side of the outer ring. The tubular projection comprises an end portion projecting beyond a side surface of the hub and cold deformed in a radially outer direction towards said side surface, so as to lock the outer ring on the hub.

Since aluminium and alloys thereof have a thermal expansion coefficient which is greater than that of the steel forming the bearings, the outer flanged hub made of light metal expands and contracts more than steel. In a certain number of cases the separation of the steel from the light metal gives rise to a phenomenon known as "fretting", i.e. relative movements of the outer bearing rings and the outer annular hub made of light metal, with consequent friction at the interface between these bodies and subsequent damage to the assembly and a reduction in its working life. Once separation of the light metal from the steel has occurred, a marked radial expansion of the outer hub with respect to the bearing creates an interstice between the two bodies. Inevitably contaminants, such as water and dirt, penetrate inside this interstice which with time opens up at the two opposite axial ends of the assembly, resulting in corrosion, which may or may not be galvanic in nature, at the interface between the light alloy and the steel.

The abovementioned drawbacks arise in particular in hub-bearing assemblies which include two axially spaced bearing units fixed directly inside an axial central cavity formed by the flanged, outer, aluminium hub. The separation and corrosion phenomena are accentuated by the bending moment which during operation is induced in the outer light-alloy hub as a result of the interaxial distance between the two bearings. This results in a concentration of mechanical stresses precisely in the zones of the aforementioned central cavity where the outer rings of the bearing units are housed.

### SUMMARY OF THE INVENTION

A main object of the present invention is to achieve reliable coupling between a conventional bearing, which is typically made of bearing steel and a flanged annular outer hub made of a second material which is lighter than steel, preferably an aluminium alloy. In particular, it is desired to limit the effects of the difference in thermal expansion and prevent occurrence of the fretting and corrosion phenomena described above. Moreover, it is desired to provide a hub-bearing assembly which, in addition to having overall a light weight, ensures at the same time an optimum performance in terms of structural strength. A further particular object of the invention is to provide a hub-bearing assembly using standard so-called "1st generation" bearings with a view to limiting the time and the costs for the manufacturing and assembly operations.

This object, together with other objects and advantages, which will be understood more clearly below, is achieved by a hub-bearing assembly having the features set forth in claim 1. Preferred embodiments are defined in the dependent claims.

### BRIEF DESCRIPTION OF THE DRAWINGS

A few preferred embodiments of the invention will now be described by way of non-limiting examples. Reference is made to the accompanying drawings in which:
Figure 1 is an axially sectioned view of a first embodiment of a hub-bearing assembly according to the invention;
Figure 2 is an axially sectioned view of a component of the assembly shown in Figure 1;
Figure 3 is an axially sectioned view of a second embodiment of an assembly according to the invention; and
Figure 4 is an axially sectioned view of a component of the assembly shown in Figure 3.

### DETAILED DESCRIPTION OF PREFERRED EMBODIMENTS

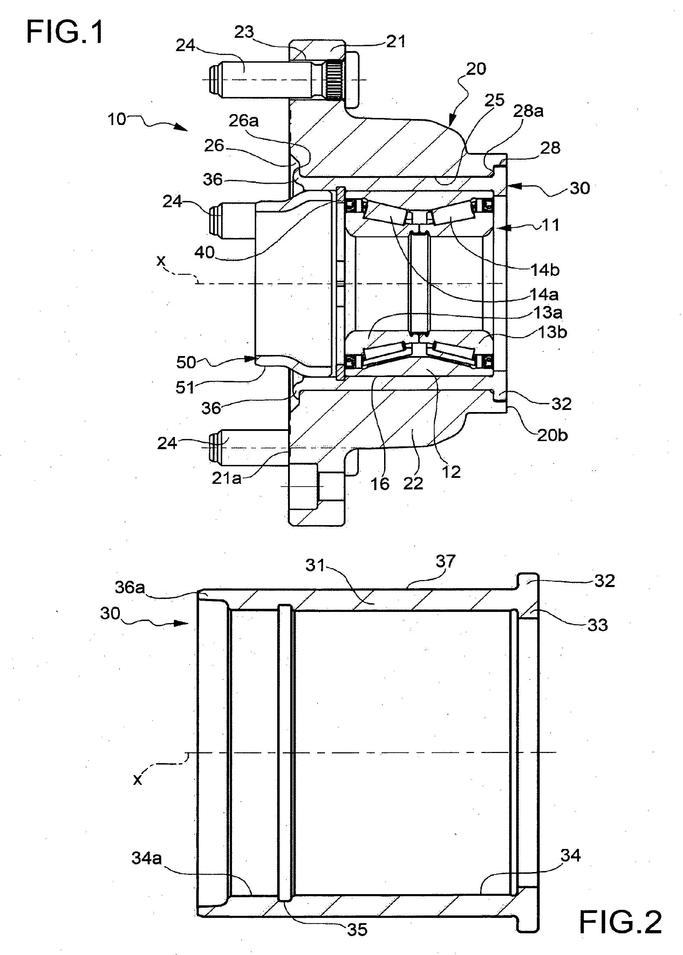

With reference initially to Figure 1, numeral 10 designates overall a hub-bearing unit provided with a central axis x and comprising a bearing 11 with a double row of rolling elements and a radially outer, rotatable annular hub 20 inside which the bearing 11 is mounted. Throughout the present description and in the claims which follow, terms and expressions indicating positions and directions, such as "radial" and "axial", are to be understood as referring to the axis of rotation x. Expressions such as "inboard" and "outboard" are instead understood as referring to a condition as when mounted on a vehicle. Although the assembly described herein is particularly advantageous on commercial vehicles belonging to the category of light trucks, this application is not to be regarded as limiting in any way the scope of the patent.

The bearing 11 comprises a radially outer ring 12, a radially inner ring 13, including a pair of half-rings 13a, 13b arranged axially alongside each other, and two sets or rows of rolling elements 14a, 14b, arranged between the outer ring 13 and the inner ring 14. The choice as to the type of rolling element (tapered rollers or balls) is not to be regarded as limiting. The bearing 11 is a standard so-called "1st generation" bearing in which the outer surface 16 of the outer ring 12 is cylindrical.

The hub 20, which has an overall annular shape, comprises a radial flange 21 which is transverse to the axis x so as to allow mounting of a wheel (not shown) of a vehicle and comprises a main portion 22 with a substantially tubular shape. The flange extends radially outwards on the outboard side of the hub 20 and has a certain number of holes 23 which are each engaged by a respective screw 24 for allowing connection of the aforementioned wheel (not shown).

On the axially outer side (or outboard side) the flange 21 has a flat radial surface 21a which defines a precise reference surface on which the brake disk and the wheel (not shown) are mounted.

Numeral 25 designates a central cavity of cylindrical shape which is formed in the main tubular portion 22 of the annular hub 20; the cavity 25 serves to accommodate the bearing 11 via a cylindrical tubular sleeve 30 (shown separately in Figure 2) which is arranged in between, as described in detail further below.

The cylindrical cavity 25 opens out on the axially outer side so as to form a widened annular groove 26 axially inset with respect to the flat radial surface 21a of the flange 21. The widened groove 26 forms a radial abutment surface 26a. The central cylindrical cavity also has on the axially inner (inboard) side an annular widening 28 defining a radial abutment surface 28a.

Whereas the bearing 11 is an entirely conventional bearing, the rings 12, 13a, 13b of which are made of bearing steel, the annular hub 20 is made of a lightweight material, preferably, but not necessarily, aluminium or magnesium or alloys thereof. Other materials suitable for the annular hub 20 may include, but without being limited thereto, composite carbon materials or reinforced polymers.

The bearing 12 is mounted inside the cavity 25 of the annular hub 20 by means of a cylindrical tubular sleeve 30 which is made of steel, preferably bearing steel. The sleeve 30 has a main tubular portion 31 with an axial length greater than that of the outer ring 12 of the bearing. At the axially inner end, the sleeve 30 is preformed with two radial shoulders and more specifically a shoulder 32 in the form of an edge protruding radially outwards and a shoulder 33 in the form of an edge protruding radially inwards with respect to the main tubular portion 31 of the sleeve.

The main tubular portion 31 has an inner cylindrical cavity 34 which has, formed therein, at a certain distance from both the axial ends of the sleeve 30, an annular radial groove 35 suitable for seating a Seeger retaining ring 40. The Seeger ring is partially seated inside the groove 35 so as to lock, on the axially outer side, the outer ring 12 of the bearing. On the axially inner side, the outer ring 12 of the bearing abuts against the inner radial shoulder 33 of the sleeve 30.

The groove 35 is formed in an axial position closer to the outboard side than to the inboard side of the sleeve, thus defining a portion 34a of the cylindrical cavity 34 on the outboard side inside which a tubular element 50 is force-fitted with radial interference, said tubular element having an axial length such as to protrude, in the mounted condition, in an axially outer direction beyond the radial flange 21 and thereby provide a cylindrical surface 51 for centring the wheel. Advantageously, the tubular element 50 axially abuts on the inboard side against the retaining ring 40.

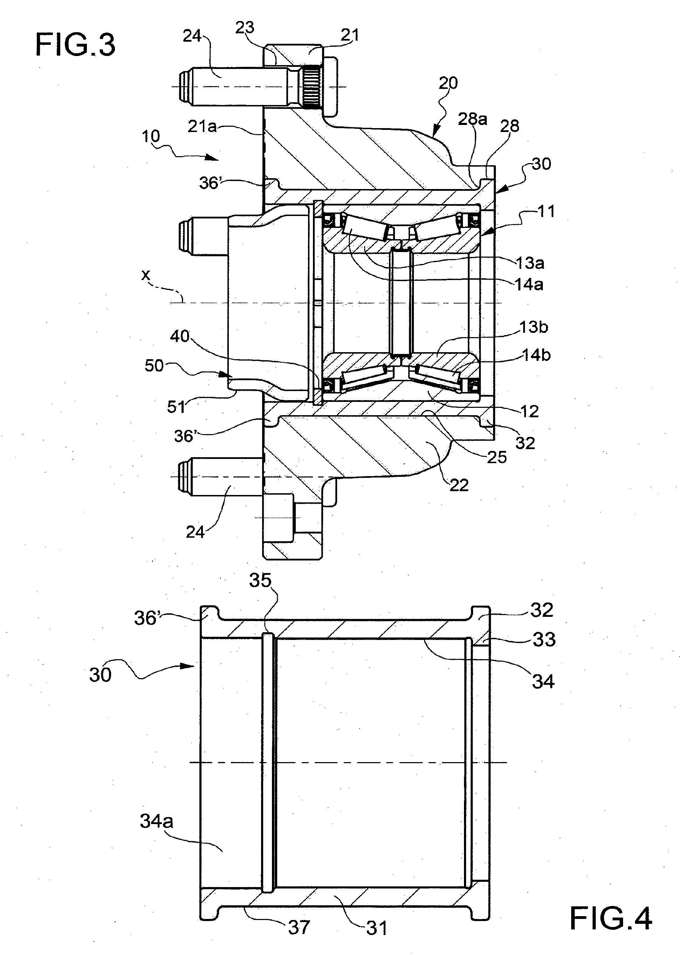

In Figure 3, the axially outer end 36a of the sleeve 30, which is preferably thinner than the tubular portion 31, is shown in its initial undeformed and straight condition.

In order to assemble the assembly according to the embodiment of Figure 1, the sleeve 30 is firstly inserted in an undeformed condition inside the cylindrical cavity 25 on the inboard side so that its end 36a is left protruding axially beyond the radial surface 26a formed by the groove 26. The shoulder 32 is brought into axial abutment against the radial surface 28a of the groove 28. Alternatively, in an embodiment which is not shown, the groove 28 may be dispensed with and the shoulder 32 may abut against the lateral radial surface 20b of the annular hub 20 on the inboard side.

Preferably, the tubular portion 31 of the sleeve is force-fitted with a certain radial interference inside the cylindrical cavity 25 of the annular hub 20.

The axial end 36a of the sleeve 30 is then cold-deformed, preferably by means of orbital rolling, forming an edge 36 (Figure 1) protruding in a radially outer direction against the radial surface 26a of the groove 26.

Preferably, as shown in the embodiment of Figure 1, the rolled edge 36 does not protrude beyond the plane in which the axially outer surface 21a of the flange 21 lies, but is slightly inset in an axial direction relative to the latter, so as not to interfere with the wheel or the brake disk (which require an extremely precise radial mounting surface in order to avoid undesirable juddering effects).

Then the preassembled bearing 11 is inserted inside the cavity 35, being preferably force-fitted with a certain radial interference inside the tubular sleeve 30; the relative axial position of the bearing and the sleeve 30 is determined, on the inboard side, by the shoulder 33 and, on the outboard side, by the Seeger ring 40. Finally, the tubular element 50 is mounted, being force-fitted with radial interference inside the cylindrical cavity 34 of the sleeve, in the part 34a thereof situated towards the outboard side with respect to the groove 35 and the Seeger ring 40.

The shoulder 32 on one side and the rolled edge 36 on the other side exert a constraining action in the axial direction on the aluminium annular hub 20; this action, by way of a direct consequence, also limits the radial expansion of the annular hub 20 made of lightweight material with respect to the steel sleeve 30. The axial constriction exerted by the shoulder 32 and by the rolled edge 36, in addition to limiting the thermal expansion of the outer annular hub 20, also prevents the formation of openings at the opposite axial ends of the zone where interference occurs between the lightweight material of the annular hub 20 and the steel of the sleeve 30, thus preventing the entry of contaminants and avoiding the undesirable drawbacks mentioned in the introductory part of the present description.

Owing to the tubular shape of the sleeve 30 and its axial dimension which is much greater than its radial thickness, the effects of the difference in thermal expansion of the steel and the lightweight material forming the annular hub 20 occur mainly in the axial direction and less in the radial direction.

The sleeve 30 advantageously allows the assembly of a bearing unit having an axial extension which is considerably smaller than the axial thickness of the annular hub 20, with consequent savings in terms of weight.

Optionally, in order to provide anti-rotation means, i.e. means suitable for preventing further the relative rotation of the sleeve 30 and the annular hub 20, the outer cylindrical surface 37 of the sleeve may be provided with axially extending projections or channels (not shown).

The embodiment of the assembly shown in Figure 3 differs from that of Figure 1 principally in that the sleeve 30 is preformed, at its axially outer end, so as to have a shoulder 36' in the form of an edge protruding radially outwards. The flanged annular hub 20 made of lightweight material will be injection-moulded around the sleeve 30, thus reproducing the shape of the outer surface of the sleeve 30. When thermal stresses tending to cause varying expansion of the annular hub 20 and the sleeve 30 occur, the shoulders 32 and 36' of the sleeve exert an axial constraining action which is entirely similar to that described with reference to the embodiment of Figure 1, with a consequent limitation of the radial expansion, achieving the same advantages mentioned above.

The sleeve 30 may advantageously have, on its outer cylindrical surface 37, radial reliefs and/or recesses, such as bosses or channels or peaks, which do not necessarily extend in the axial direction, so as to provide means able to prevent relative rotation of the annular hub 20 and the sleeve 30 itself.

So as not to interfere with the wheel or the brake rotor, the shoulder 36' does not project in the axially outer direction beyond the flat radial surface 21a of the flange of the annular hub 20 made of lightweight material.

Once the hub 20 has been formed around the sleeve 30, the bearing 11, the Seeger ring 40 and the tubular element 50 may be assembled as described with reference to the embodiment shown in Figure 1.

## Claims

1. A hub-bearing assembly (10) for the wheel of a motor vehicle, the assembly comprising:
- a radially outer, rotatable annular hub (20) which is made of a material lighter than steel and is provided with a tubular portion (22) with a central, cylindrical, axial cavity (25) and a radially outwardly extending flange (21) for mounting a wheel;
- a bearing (11) with a double row of rolling elements (14, 14b) and provided with a single radially outer ring (12) seated in the cylindrical cavity (25) of the rotatable annular hub (20);
- a steel, tubular, connecting sleeve (30) in which the outer bearing ring (12) is locked, the sleeve (30) being radially interposed between the outer bearing ring (12) and the central cavity (25) of the rotatable annular hub, the sleeve having opposite axial ends providing a respective first edge (32) and a second edge (36, 36'), said first edge (32) and second edge (36, 36') protruding in radially outward directions against two respective radial surfaces (26a, 28a) on axially opposite sides of the rotatable annular hub (20), whereby said rotatable annular hub is axially locked between said first edge (32) and second edge (36, 36'), **characterized in that** the sleeve comprises a further edge (33) which protrudes in a radially inner direction from the axially inner end of the sleeve and is preformed to act as a shoulder and axially lock the outer bearing ring (12) on the axially inner side.

2. An assembly according to Claim 1, **characterized in that** the outer bearing ring (12) has an axial length less than the axial length of the sleeve and less than the axial length or axial thickness of the tubular portion (22) of the rotatable annular hub (20).

3. An assembly according to any of the preceding claims, **characterized in that** the sleeve (30) has an annular radial groove (35) formed in an inner cylindrical cavity (34) of the sleeve in a position spaced from both axial ends of the sleeve (30) and a retaining ring (40) is retained in the annular groove (35) so as to act as a shoulder for axially locking the outer bearing ring (12) on the axially outer side.

4. An assembly according to any of the preceding claims, **characterized in that** the assembly also comprises a tubular element (50) force-fitted with radial interference inside a cylindrical inner cavity (34) of the sleeve (30), the tubular element (50) having an axial length such as to protrude in an axially outer direction beyond the radial flange (21) and thereby provide a cylindrical surface (51) for centring the wheel of the vehicle.

5. An assembly according to Claims 3 and 4, **characterized in that** the sleeve (30) has an axially outer side and an axially inner side, the groove (35) is formed in an axial position closer to the axially outer side than the axially inner side of the sleeve (30), thus defining a portion (34a) of the cylindrical cavity (34) towards the axially outer side, and the tubular element (50) is force-fitted inside said portion (34a) and axially abuts, on the axially inner side, against the retaining ring (40).

6. An assembly according to any one of the preceding claims, **characterized in that** the sleeve (30) has an outer cylindrical surface (37) with radial reliefs and/or radial recesses acting as means for preventing relative rotation between the sleeve (30) and the rotatable annular hub (20).

7. An assembly according to any one of the preceding claims, **characterized in that** the edge (36, 36') protruding radially from the axially outer end of the sleeve (30) does not protrude axially beyond a geometric plane lying on an axially outer, flat, radial surface (21a) of the flange (21).

8. An assembly according to Claim 7, **characterized in that** said edge (36, 36') is contained in an annular groove (26) which is a widening of the cylindrical cavity (25) at a location where this cavity opens out on the axially outer side on the flat surface (21a) of the flange (21).

9. An assembly according to any of the preceding claims, **characterized in that** the rotatable annular hub (20) is made of a lightweight metal such as aluminium, magnesium or alloys thereof.

10. Method of assembling a hub-bearing assembly (10), the assembly being defined according to any of the preceding claims, wherein the method comprises:
- inserting the sleeve (30) in an undeformed condition inside the cylindrical cavity (25) on the inboard side,
- pushing the first edge (32) of the sleeve (30) against the radial surface (28a) of the rotatable annular hub (20),
- cold-deforming an axial end (36a) of the sleeve (30), forming the second edge (36), protruding in a radially outer direction against the radial surface 26a of the rotatable annular hub (20).

11. Method of assembling a hub-bearing assembly (10), the assembly being defined according to any of the claims from 1 to 9, wherein the method comprises:
- preforming the sleeve (30), at its axially outer end, so as to have the second edge (36') in the form of an edge protruding radially outwards,
- moulding by injection the rotatable annular hub (20) around the sleeve (30), thus reproducing the shape of the outer surface of the sleeve (30).

## Patentansprüche

1. Nabenlageranordnung (10) für das Rad eines Kraftfahrzeugs, die Anordnung aufweisend:
- eine radial äußere, drehbare ringförmige Nabe (20), die aus einem Material hergestellt ist, das leichter als Stahl ist, und mit einem röhrenförmigen Abschnitt (22) mit einem mittigen, zylindrischen, axialen Hohlraum (25) und einem radial nach außen verlaufenden Flansch (21) zum Anbringen eines Rads versehen ist;
- ein Lager (11) mit einer doppelten Reihe von Rollelementen (14, 14b), das mit einem einzelnen, radial äußeren Ring (12) versehen ist, der im zylindrischen Hohlraum (25) der drehbaren, ringförmigen Nabe (20) eingesetzt ist;
- eine röhrenförmige Stahlverbindungshülse (30), in der der äußere Lagerring (12) gesperrt ist, wobei die Hülse (30) radial zwischen dem äußeren Lagerring (12) und dem mittigen Hohlraum (25) der drehbaren, ringförmigen Nabe eingeschoben ist, wobei die Hülse gegenüberliegende axiale Enden aufweist, die eine jeweilige erste Kante (32) und eine zweite Kante (36, 36') vorsehen, wobei die erste Kante (32) und zweite Kante (36, 36') in Richtungen radial nach außen gegen zwei jeweilige radiale Oberflächen (26a, 28a) auf axial gegenüberliegenden Seiten der drehbaren, ringförmigen Nabe (20) vorstehen, wobei die drehbare, ringförmige Nabe axial zwischen der ersten Kante (32) und zweiten Kante (36, 36') gesperrt ist, **dadurch gekennzeichnet, dass** die Hülse eine weitere Kante (33) aufweist, die in einer Richtung radial nach innen vom axial inneren Ende der Hülse vorsteht und zum Wirken als Schulter und zum axialen Sperren des äußeren Lagerrings (12) auf der axial inneren Seite vorgeformt ist.

2. Anordnung nach Anspruch 1, **dadurch gekennzeichnet, dass** der äußere Lagerring (12) eine axiale Länge aufweist, die geringer als die axiale Länge der Hülse und geringer als die axiale Länge oder axiale Stärke des röhrenförmigen Abschnitts (22) der drehbaren, ringförmigen Nabe (20) ist.

3. Anordnung nach einem der vorhergehenden Ansprüche, **dadurch gekennzeichnet, dass** die Hülse (30) eine ringförmige radiale Nut (35) aufweist, die in einem inneren zylindrischen Hohlraum (34) der Hülse in einer Position ausgebildet ist, welche von beiden axialen Enden der Hülse (30) beabstandet ist, und ein Haltering (40) derart in der ringförmigen Nut (35) gehalten ist, dass er als Schulter zum axialen Sperren des äußeren Lagerrings (12) auf der axial äußeren Seite wirkt.

4. Anordnung nach einem der vorhergehenden Ansprüche, **dadurch gekennzeichnet, dass** die Anordnung außerdem ein röhrenförmiges Element (50) aufweist, das mit radialer Festpassung innerhalb eines zylindrischen inneren Hohlraums (34) der Hülse (30) pressgepasst ist, wobei das röhrenförmige Element (50) eine derartige axiale Länge aufweist, dass es in einer Richtung axial nach außen über den radialen Flansch (21) hinaus vorsteht und dadurch eine zylindrische Fläche (51) zum Zentrieren des Rads des Fahrzeugs vorsieht.

5. Anordnung nach einem der Ansprüche 3 und 4, **dadurch gekennzeichnet, dass** die Hülse (30) eine axial äußere Seite und eine axial innere Seite aufweist, die Nut (35) in einer axialen Position ausgebildet ist, welche näher an der axial äußeren Seite als an der axial inneren Seite der Hülse (30) liegt, wodurch ein Abschnitt (34a) des zylindrischen Hohlraums (34) zur axial äußeren Seite definiert ist, und das röhrenförmige Element (50) innerhalb des Abschnitts (34a) pressgepasst ist und auf der axial inneren Seite an den Haltering (40) anstößt.

6. Anordnung nach einem der vorhergehenden Ansprüche, **dadurch gekennzeichnet, dass** die Hülse (30) eine zylindrische Außenfläche (37) mit radialen Reliefs und/oder radialen Aussparungen aufweist, die als Mittel zum Verhindern relativer Drehung zwischen der Hülse (30) und der drehbaren, ringförmigen Nabe (20) wirkt.

7. Anordnung nach einem der vorhergehenden Ansprüche, **dadurch gekennzeichnet, dass** die Kante (36, 36'), die radial vom axial äußeren Ende der Hülse (30) vorsteht, axial nicht über eine geometrische Ebene hinaus vorsteht, die auf einer axial äußeren, flachen, radialen Oberfläche (21a) des Flanschs (21) liegt.

8. Anordnung nach Anspruch 7, **dadurch gekennzeichnet, dass** die Kante (36, 36') in einer ringförmigen Nut (26) enthalten ist, die eine Aufweitung des zylindrischen Hohlraums (25) an einer Stelle ist, an der dieser Hohlraum zur axial äußeren Seite der flachen Oberfläche (21a) des Flanschs (21) mündet.

9. Anordnung nach einem der vorhergehenden Ansprüche, **dadurch gekennzeichnet, dass** die drehbare, ringförmige Nabe (20) aus einem leichtgewichtigen Metall hergestellt ist, wie etwa Aluminium, Magnesium oder Legierungen davon.

10. Verfahren zum Zusammenbauen einer Nabenlageranordnung (10), wobei die Anordnung nach einem der vorstehenden Ansprüche definiert ist, wobei das Verfahren Folgendes aufweist:
- Einführen der Hülse (30) in einem unverformten Zustand in den zylindrischen Hohlraum (25) auf der Innenseite,
- Schieben der ersten Kante (32) der Hülse (30) an die radiale Oberfläche (28a) der drehbaren, ringförmigen Nabe (20),
- Kaltverformen eines axialen Endes (36a) der Hülse (30), wodurch die zweite Kante (36) ausgebildet wird, die in einer Richtung radial nach außen an die radiale Oberfläche (26a) der drehbaren, ringförmigen Nabe (20) vorsteht.

11. Verfahren zum Zusammenbauen einer Nabenlageranordnung (10), wobei die Anordnung nach einem der Ansprüche 1 bis 9 definiert ist, wobei das Verfahren Folgendes aufweist:
- Vorformen der Hülse (30) an ihrem axial äußeren Ende, sodass sie die zweite Kante (36') in der Form einer Kante aufweist, die radial nach außen vorsteht,
- Spritzgießen der drehbaren, ringförmigen Nabe (20) um die Hülse (30), wodurch die Form der Außenfläche der Hülse (30) reproduziert wird.

## Revendications

1. Ensemble moyeu-palier (10) pour la roue d'un véhicule automobile, l'ensemble comprenant :
- un moyeu annulaire rotatif radialement extérieur (20) fabriqué en un matériau plus léger que l'acier et pourvu d'une portion tubulaire (22) avec une cavité centrale, cylindrique, axiale (25) et une bride (21) s'étendant radialement vers l'extérieur pour le montage d'une roue ;
- un palier (11) avec une double rangée d'éléments de roulement (14, 14b) et pourvu d'une bague unique radialement externe (12) reçue dans la cavité cylindrique (25) du moyeu annulaire rotatif (20) ;
- un manchon de connexion en acier tubulaire (30) dans lequel la bague de palier externe (12) est verrouillée, le manchon (30) étant interposé radialement entre la bague de palier externe (12) et la cavité centrale (25) du moyeu annulaire rotatif, le manchon ayant des extrémités axiales opposées constituant un premier bord (32) et un deuxième bord (36, 36') respectifs, ledit premier bord (32) et ledit deuxième bord (36, 36') faisant saillie dans des directions radialement vers l'extérieur contre deux surfaces radiales respectives (26a, 28a) sur des côtés axialement opposés du moyeu annulaire rotatif (20), ledit moyeu annulaire rotatif étant verrouillé axialement entre ledit premier bord (32) et ledit deuxième bord (36, 36'), **caractérisé en ce que** le manchon comprend un bord supplémentaire (33) qui fait saillie dans une direction radialement vers l'intérieur depuis l'extrémité radialement interne du manchon et qui est préformé de manière à agir en tant qu'épaulement et à verrouiller axialement la bague de palier externe (12) sur le côté axialement interne.

2. Ensemble selon la revendication 1, **caractérisé en ce que** la bague de palier externe (12) présente une longueur axiale inférieure à la longueur axiale du manchon et inférieure à la longueur axiale ou à l'épaisseur axiale de la portion tubulaire (22) du moyeu annulaire rotatif (20).

3. Ensemble selon l'une quelconque des revendications précédentes, **caractérisé en ce que** le manchon (30) présente une gorge annulaire radiale (35) formée dans une cavité cylindrique interne (34) du manchon dans une position espacée des deux extrémités axiales du manchon (30) et une bague de retenue (40) est retenue dans la gorge annulaire (35) de manière à agir en tant qu'épaulement pour verrouiller axialement la bague de palier externe (12) sur le côté axialement externe.

4. Ensemble selon l'une quelconque des revendications précédentes, **caractérisé en ce que** l'ensemble comprend également un élément tubulaire (50) ajusté par force par emboîtement radial à l'intérieur d'une cavité cylindrique interne (34) du manchon (30), l'élément tubulaire (50) ayant une longueur axiale telle qu'il fasse saillie dans une direction axialement vers l'extérieur au-delà de la bride radiale (21) pour ainsi fournir une surface cylindrique (51) pour le centrage de la roue du véhicule.

5. Ensemble selon les revendications 3 et 4, **caractérisé en ce que** le manchon (30) présente un côté axialement externe et un côté axialement interne, la gorge (35) est formée dans une position axiale plus proche du côté axialement externe que du côté axialement interne du manchon (30), pour ainsi définir une portion (34a) de la cavité cylindrique (34) vers le côté axialement externe, et l'élément tubulaire (50) est ajusté par force à l'intérieur de ladite portion (34a) et bute axialement sur le côté axialement interne contre la bague de retenue (40).

6. Ensemble selon l'une quelconque des revendications précédentes, **caractérisé en ce que** le manchon (30) présente une surface cylindrique externe (37) avec des reliefs radiaux et/ou des retraits radiaux servant de moyens pour empêcher une rotation relative entre le manchon (30) et le moyeu annulaire rotatif (20).

7. Ensemble selon l'une quelconque des revendications précédentes, **caractérisé en ce que** le bord (36, 36') faisant saillie radialement depuis l'extrémité axialement externe du manchon (30) ne fait pas saillie axialement au-delà d'un plan géométrique situé sur une surface axialement externe, plate, radiale (21a) de la bride (21).

8. Ensemble selon la revendication 7, **caractérisé en ce que** ledit bord (36, 36') est contenu dans une gorge annulaire (26) qui est un élargissement de la cavité cylindrique (25) en un emplacement auquel cette cavité s'ouvre sur le côté axialement externe sur la surface plate (21a) de la bride (21).

9. Ensemble selon l'une quelconque des revendications précédentes, **caractérisé en ce que** le moyeu annulaire rotatif (20) est fabriqué en un matériau léger tel que de l'aluminium, du magnésium ou des alliages de ceux-ci.

10. Procédé pour assembler un ensemble moyeu-palier (10), l'ensemble étant défini selon l'une quelconque des revendications précédentes, dans lequel le procédé comprend :
- l'insertion du manchon (30) dans un état non déformé à l'intérieur de la cavité cylindrique (25) sur le côté interne,
- le fait de pousser le premier bord (32) du manchon (30) contre la surface radiale (28a) du moyeu annulaire rotatif (20),
- la déformation à froid d'une extrémité axiale (36a) du manchon (30), en formant le deuxième bord (36) faisant saillie dans une direction radialement vers l'extérieur contre la surface radiale (26a) du moyeu annulaire rotatif (20).

11. Procédé d'assemblage d'un ensemble moyeu-palier (10), l'ensemble étant défini selon l'une quelconque des revendications 1 à 9, dans lequel le procédé comprend :
- le fait de préformer le manchon (30), au niveau de son extrémité axialement externe de manière à ce que le deuxième bord (36') soit sous la forme d'un bord faisant saillie radialement vers l'extérieur,
- le moulage par injection du moyeu annulaire rotatif (20) autour du manchon (30), pour ainsi reproduire la forme de la surface externe du manchon (30).
